# EUROPÄISCHE PATENTSCHRIFT

(11) **EP 2 791 017 B1**
(45) Veröffentlichungstag und Bekanntmachung des Hinweises auf die Patenterteilung: **26.04.2017**
(21) Anmeldenummer: 12799533.0
(22) Anmeldetag: 28.11.2012
(51) Int. Cl.: B65B 69/00, B65G 47/06, B65G 47/90, B65G 65/23, B65G 65/36

(54) **VORRICHTUNG UND VERFAHREN ZUM ENTLEEREN EINES MIT STÜCKGUT BELADENEN LADUNGSTRÄGERS**
APPARATUS AND METHOD FOR EMPTYING LOAD CARRIERS, LOADED WITH PIECE GOODS
APPAREIL ET PROCÉDÉ POUR VIDER DES PORTE-CHARGES, REMPLIS DE MARCHANDISES

(30) Priorität: 16.12.2011 DE 102011088821; 26.01.2012 DE 102012201149; 18.05.2012 DE 102012208385
(43) Veröffentlichungstag der Anmeldung: 22.10.2014
(73) Patentinhaber: Buse, Heinz, 26160 Bad Zwischenahn (DE)
(72) Erfinder: Buse, Heinz, 26160 Bad Zwischenahn (DE)
(74) Vertreter: Eisenführ Speiser
(86) Internationale Anmeldenummer: PCT/EP2012/073837
(87) Internationale Veröffentlichungsnummer: WO 2013/087413

(56) Entgegenhaltungen:
- JP-A- 54 110 089
- US-A- 2 127 007
- US-A- 2 735 561
- US-A- 3 616 951
- US-A- 3 767 073
- US-A- 4 106 635

## Beschreibung

Die vorliegende Erfindung betrifft eine Vorrichtung zum Entleeren eines mit Stückgut, insbesondere in Form von Packstücken, beladenen Ladungsträgers, welcher eine seitliche Auslassöffnung zur Entnahme des Stückguts aufweist, mit einer Aufnahme für den Ladungsträger, und einem Förderer zum Abführen des Stückguts.

Die Erfindung betrifft weiterhin ein Verfahren zum Entleeren eines mit Stückgut, insbesondere in Form von Packstücken, beladenen Ladungsträgers, weiches eine seitliche Auslassöffnung zur Entnahme des Stückguts aufweist.

Vorrichtungen und Verfahren der vorstehend benannten Art finden insbesondere in Logistikzentren Verwendung, in welchen Stückgut umgeschlagen wird. Als Beispiel sind insbesondere Paketzentren von Logistikdienstleistern zu nennen. Bei diesen Einrichtungen wird zum Umschlag des Stückguts, insbesondere zum Umschlag von Packstücken, eine Vielzahl von Ladungsträgern mittels Fahrzeugen, beispielsweise LKW oder Zügen, angeliefert und bereitgestellt. Es sind hierbei Transportsysteme bekannt, welche den Einsatz von Ladungsträgern in Form von Containern oder Wechselbrücken vorsehen, sowie andere Systeme, beispielsweise der hiesigen Anmelderin, die speziell konfektionierte Ladungsträger verwenden, welche innerhalb von LKWs, Containern, Wechselbrücken, Zugwaggons oder anderen Fahrzeugen transportiert werden, und deren Ausmaße im Wesentlichen an die inneren Ladeabmessungen solcher Fahrzeuge angepasst sind. Um einen reibungslosen und effizienten Betrieb solcher Logistiksysteme zu gewährleisten, ist es von zentraler Bedeutung, die angelieferten Ladungsträger in kurzer Zeit von dem geladenen Stückgut zu befreien und gleichzeitig eine Beschädigung des Stückguts möglichst zu vermeiden.

Das Entladen der Ladungsträger wird typischerweise manuell vorgenommen oder mittels speziell ausgebildeter Übergabestationen, welche eine Entnahme des Stückguts in vereinzelter Form ermöglichen. Diesen bekannten Arten des Entleerens von Ladungsträgern ist gemein, dass sie entweder hohen personellen Einsatz oder jedenfalls hohen Zeiteinsatz erfordern, was einen effizienten Betrieb limitiert.

Bisherige Versuche, Vorrichtungen zum Entleeren eines mit Stückgut beladenen Ladungsträgers anzugeben, welche eine schnellere Entleerung des Ladungsträgers ermöglichen, sahen sich der Herausforderung ausgesetzt, dass jeder Ladungsträger unterschiedlich und bisweilen inhomogen gepackt ist. Stückgut unterschiedlicher Größe und unterschiedlichen Formats ist bestenfalls teilweise systematisch in den bekannten Ladungsträgern angeordnet, weil die Beladung der Ladungsträger in anderen Logistikzentren nach Eingang des Stückguts erfolgt und in der Regel keine Vorsortierung möglich ist. Ein beschleunigtes Entleeren derart gepackter Ladungsträger, beispielsweise in Form von Schütten, hat bislang zwangsläufig zu hohen Defektraten geführt. Eine Vorrichtung gemäß dem Oberbegriff des Anspruchs 1 ist aus JP 54110089 bekannt. Der Erfindung lag folglich die Aufgabe zugrunde, eine Vorrichtung und ein Verfahren der eingangs genannten Art anzugeben, welche ein schnelleres Entleeren des mit Stückgut beladenen Ladungsträgers ermöglichen, und gleichzeitig eine Beschädigung des Stückguts möglichst weitgehend verhindern.

Die Erfindung löst die ihr zugrunde liegende Aufgabe bei einer Vorrichtung gemäß dem Anspruch 1. Die Vorrichtung weist eine dem Förderer vorgeschaltete Förderrampe auf, wobei die Förderrampe und die seitliche Auslassöffnung des Ladungsträgers miteinander in Anlage bringbar sind, die Aufnahme und die Förderrampe in eine zur horizontalen geneigte Stellung schwenkbar sind, in welcher die Förderrampe sich in Anlage mit der seitlichen Auslassöffnung des Ladungsträgers befindet, und die Aufnahme und die mit dem Ladungsträger in Anlage befindliche Förderrampe in der geneigten Stellung derart relativ zueinander bewegbar sind, dass die Aufnahme und der Förderer einander angenähert werden. Hierbei befindet sich vorzugsweise die Aufnahme zumindest zeitweise in einem bodennahen Bereich, und der Förderer zum Abführen des Stückguts befindet sich höhenversetzt oberhalb der Aufnahme für den Ladungsträger.

Die Erfindung macht sich die Erkenntnis zunutze, dass beim Entleeren eines Ladungsträgers in geneigter Stellung aufgrund der Gewichtsbelastung durch die Vielzahl der verladenen Stückgüter in erster Linie eine Beschädigung der unteren Stückgüter innerhalb des Ladungsträgers auftritt. Sobald mehrere aufeinander liegende Stückgüter bewegt werden, kommt es aufgrund mehrachsiger Spannungszustände und leichten Verkippens der übereinander liegenden Stückgüter zu Belastungsspitzen und Beschädigungen der unten liegenden Stückgüter. Die Erfindung setzt hier an, indem sie zwar das Entleeren eines Ladungsträgers in einer schütt-ähnlichen Bewegung vollzieht, wodurch eine hohe Arbeitsgeschwindigkeit gewährleistet wird, allerdings im Gegensatz zu bekannten Ansätzen ein Entleeren des Ladungsträgers derart ermöglicht, dass die oben liegenden Stückgüter zuerst entnommen werden, wodurch jene, die Beschädigungen der unteren Stückgüter verursachenden, Belastungsspitzen weitestgehend vermieden werden können. Dies wird insbesondere durch das Zusammenspiel der seitlichen Auslassöffnung des Ladungsträgers mit der Förderrampe gewährleistet.

Die erfindungsgemäße Vorrichtung ist vorzugsweise dazu eingerichtet, die Förderrampe und die seitliche Auslassöffnung des Ladungsträgers miteinander in Eingriff zu bringen, wenn der Ladungsträger noch aufrecht steht, die Stückgüter also noch in transportgemäßer Ausrichtung stehen. Vorzugsweise werden die Förderrampe und die seitliche Auslassöffnung des Ladungsträgers in Anlage gebracht, indem die Förderrampe in eine vertikale Stellung schwenkbar ist. Weiter vorzugsweise sind die Aufnahme und die Förderrampe gemeinsam in eine zur horizontalen geneigte Stellung schwenkbar. Hierbei wird das Neigen des Ladungsträgers auf der Aufnahme vorzugsweise bei schon bestehender Anlage an der Förderrampe gewährleistet. Das Stückgut ist so in die geneigte Stellung bringbar, ohne dass innerhalb des Ladungsträgers Verwerfungen oder sogenannte Wanderbewegungen des Stückguts auftreten. Dadurch, dass die Vorrichtung zum Erzeugen der Relativbewegung zwischen der Aufnahme und der Förderrampe in vorstehend beschriebener Art und Weise eingerichtet ist, wird beim Bewegen der Förderrampe und der Aufnahme relativ zueinander in einem (oberen) Bereich in der Nähe des Förderers zum Abführen des Stückguts ein oberer Teil der seitlichen Auslassöffnung freigegeben. Auf diese Weise ist die Vorrichtung dazu angepasst, zunächst die oben liegenden Stückgüter aus dem Ladungsträger durch den freigegebenen Spalt in der seitlichen Auslassöffnung zu dem Förderer hin abzugeben. Nach und nach werden auf diese Weise immer weitere Schichten des Stückguts in dem Ladungsträger von oben herab aus dem Teil der seitlichen Auslassöffnung zum Förderer hin bewegt, aufgrund der geneigten Stellung des Ladungsträges in der Aufnahme - bis der Ladungsträger vollständig entleert ist. Die statisch ausgeglichene Lagerung der unteren, höher belasteten Stückgüter wird aufgrund der unveränderten Winkel-Anordnung des Ladungsträgers relativ zu der in Anlage gebrachten Förderrampe während des Entladungsvorgangs ständig aufrechterhalten. Dieses System ermöglicht im Vergleich zu bekannten Entladevorgängen eine deutliche Steigerung der Arbeitsgeschwindigkeit bei gleichzeitig nicht oder nur moderat ansteigender Beschädigungsrate des Stückguts im Vergleich zum manuellen Entleeren.

In einer weiteren bevorzugten Ausführungsform der vorliegenden Erfindung, die insbesondere für einen Ladungsträger optimiert ist, der eine der ersten seitlichen Auslassöffnung gegenüberliegende zweite seitliche Auslassöffnung aufweist, ist die Förderrampe eine erste Förderrampe, der Förderer ein erster Förderer, und die Vorrichtung weist ferner einen zweiten Förderer zum Abführen des Stückguts sowie eine dem zweiten Förderer vorgeschaltete zweite Förderrampe auf, wobei die zweite Förderrampe und die zweite seitliche Auslassöffnung des Ladungsträgers miteinander in Anlage bringbar sind, die Aufnahme und die zweite Förderrampe in eine zur horizontalen geneigte Stellung schwenkbar sind, in welcher die zweite Förderrampe sich in Anlage mit der zweiten seitlichen Auslassöffnung des Ladungsträgers befindet, und die Aufnahme und die mit dem Ladungsträger in Anlage befindliche zweite Förderrampe in der geneigten Stellung derart relativ zueinander bewegbar sind, dass die Aufnahme und der zweite Förderer aneinander angenähert werden. Im Unterschied zu der vorstehend beschriebenen bevorzugten Ausführungsform ist gemäß dieser Alternative also eine einzelne Aufnahme dazu vorgesehen, zwei Förderrampen und zwei Förderer mit Stückgut aus einem nach zwei Seiten öffenbaren Ladungsträger zu versorgen.

Vorzugsweise ist hierbei die Aufnahme zwischen der ersten Förderrampe und der zweiten Förderrampe angeordnet und wahlweise in Richtung der ersten oder zweiten Förderrampe schwenkbar. Hierdurch ist es möglich, zwischen einer ersten Neigungsrichtung der Aufnahme in Anlage mit einer jeweiligen Förderrampe zu einer zweiten Neigungsrichtung in Anlage mit der jeweils anderen Förderrampe zu wechseln. Besonders vorteilhaft ist eine solche Wechselbewegung insbesondere dann, wenn festgestellt wird, dass beim Ausladen des Stückguts aus dem Ladungsträger im oberen Bereich vor der Öffnung ein Stückgut-Stau vorliegt, der beispielsweise auf ein Verkeilen mehrerer Stückgüter zurückzuführen ist. Die von der Auslassöffnung weiter entfernt liegenden Stückgüter werden durch weiter vorne liegende, meist größere Stückgüter daran gehindert, sich zum Förderer hinzubewegen. Besonders vorteilhaft ist die Aufnahme in einer solchen Situation in die nicht geneigte Ausgangslage zurückbewegbar und anschließend in Richtung der anderen Förderrampe neigbar, wodurch die dann vorne liegenden Stückgüter dann behinderungsfrei abgegeben werden können.

Vorzugsweise weist der Förderer zum Abführen des Stückguts ein oder mehrere Förderbänder auf. Alternativ oder zusätzlich weist der Förderer zum Abführen des Stückguts ein oder mehrere Förderrutschen auf. Weiter vorzugsweise weist der Förderer zum Abführen des Stückguts Mittel zum Abbremsen des abgeführten Stückguts auf. Die Mittel zum Abbremsen des abgeführten Stückguts sind insbesondere dazu eingerichtet, die "Fahrt" des aus dem Ladungsträger entnommenen Stückguts entlang einer Förderstrecke, die durch den Förderer zum Abführen des Stückguts definiert ist, zu bremsen bzw. abzudämpfen. Dies wird beispielsweise mittels konventioneller Dämpfelementen, oder einer Mehrzahl von Förderern mit unterschiedlichen Fördergeschwindigkeiten gewährleistet.

Der Förderer zum Abführen des Stückguts ist weiter vorzugsweise in der Höhe und/oder im Winkel einstellbar, vorzugsweise angepasst an eine Verfahrbewegung der ersten und/oder zweiten Förderrampe. Der Förderer ist vorzugsweise am oberen Ende der Förderrampe angeordnet, so dass zwischen dem freiwerdenden Abschnitt (bzw. der freigegebenen Sektion) der seitlichen Auslassöffnung und dem Förderer selbst nur eine möglichst geringe Strecke durch das Stückgut rutschenderweise zurückgelegt werden muss. Insbesondere in jenen Ausführungsformen, in welchen die Förderrampe verfahren wird, um eine Annäherung der Aufnahme bzw. des Ladungsträgers und des Förderers zum Abführen des Stückguts aneinander zu gewährleisten, wird der Förderer vorzugsweise synchron mitbewegt.

Gemäß einer weiteren bevorzugten Weiterbildung der Erfindung weist die Vorrichtung eine Rütteleinrichtung auf. Die Rütteleinrichtung ist dazu angepasst, Vibrationen in dem Ladungsträger und/oder Vibrationen der Förderrampe zu erzeugen. Die Rütteleinrichtung ist optional zum Erzeugen von Vibrationen der Aufnahme, des Ladungsträgers, und/oder der ersten und/oder zweiten Förderrampe eingerichtet. Hierdurch wird erreicht, dass die Stückgüter in dem Ladungsträger in Bewegung versetzt werden, wodurch das Herausgleiten aus dem (oberen) freiwerdenden Abschnitt der seitlichen Auslassöffnung in geneigter Stellung des Ladungsträgers bzw. der Aufnahme in Anlage mit der Förderrampe erleichtert wird. Insbesondere bei inhomogen gepackten Ladungsträgern, bei denen in einem Bereich in der Nähe der seitlichen Auslassöffnung größere Pakete angeordnet sind, neben welchen kleinere Pakete angeordnet sind, sorgen die größeren Pakete für einen "Stau", welcher dann bei einem Freiwerden der größeren Stückgüter zu einem plötzlichen Austreten einer Vielzahl (auch kleinerer) Stückgüter führt. Durch das Erzeugen von Vibrationen mittels der Rütteleinrichtung wird es den kleineren, hinter potentiell größeren Stückgütern angeordneten Stückgütern ermöglicht, an jenen größeren Stückgütern vorbeizugelangen. Hierdurch werden unvorteilhafte Stückgut-Staus und ein Überschlagen des herausfallenden weiter hinten liegender kleinerer Stückgüter verhindert bzw. jedenfalls eingedämmt. Dies trägt wiederum zu einer Verminderung der Stückgutbeschädigung bei.

Erfindungsgemäß ist zwischen der Förderrampe und dem Förderer zum Abführen des Stückguts ein Förderband zur Überführung des Stückguts von dem Ladungsträger in Richtung des Förderers angeordnet. Damit können insbesondere großformatige Stückgüter, die die zwischen Förderrampe und Ladungsträger freiwerdende seitliche Auslassöffnung passieren, mittels der Umlenkrolle besser, d.h. gleichzeitig schneller und sanfter in Richtung des Förderers zum Abführen des Stückguts umgelenkt werden. Dies ist insbesondere dann von Vorteil, wenn hinter den großformatigen Stückgütern kleinere Stückgüter im Inneren des Ladungsträgers angeordnet sind, welche durch die größeren Stückgüter am Austreten aus dem Ladungsträger gehindert werden. Mittels dem Förderband zur Überführung des Stückguts von dem Ladungsträger in Richtung des Förderers wird mithin ein Stückgut-Stau vermindert, oder bestenfalls vermieden. Das Förderband ist vorzugsweise so gestaltet, dass das Förderband um zwei Rollen umlaufend angeordnet ist, wobei eine erste Rolle als Antriebsmittel dient und eine zweite Rolle als Umlenkrolle. Weiter vorzugsweise ist die erste und/oder die zweite Rolle derart höhenverstellbar, dass der Neigungswinkel einer Oberseite des Förderbandes, üblicherweise die Transportseite bzw. die dem Stückgut zugewandte Seite, verstellbar ist. Weiter vorzugsweise weisen die Rollen unterschiedliche Durchmesser auf, wobei besonders bevorzugt die der Förderrampe nähere Rolle der beiden Rollen einen größeren Durchmesser als die dem Förderer zum Abführen des Stückguts nähere Rolle. Hieraus ergibt sich der Vorteil, dass der förderrampennahe größere Durchmesser eine sanfte Umlenkung bewirkt, während der dem Förderer zum Abführen des Stückguts zugewandte kleinere Durchmesser an jener Stelle ein geringeres Spaltmaß ermöglicht. Das Förderband ist vorzugsweise mit einer höheren Geschwindigkeit, als die relative Geschwindigkeit zwischen der Aufnahme und der Förderrampe antreibbar. Alternativ zu einem Antrieb mit gleicher Geschwindigkeit ist das beschleunigte Antreiben des Förderbandes besonders bevorzugt, weil hierdurch die in der Nähe des Förderbandes befindlichen Stückgüter aus dem Inneren des Ladungsträgers hinaus beschleunigt, gewissermaßen "gezogen" werden. Dies verbessert die Entnahme des Stückguts insgesamt und minimiert zusätzlich die Gefahr des Verkeilens von Stückgut im Bereich der Öffnung des Ladungsträgers.

Besonders bevorzugt ist diese Art des Antriebs des Förderbandes, wenn das Förderband so angewinkelt sind, dass das Stückgut nicht in einem rechten Winkel oder sogar in einem noch spitzeren Winkel aus dem Ladungsträger heraus gefördert wird, sondern in einem stumpfen Winkel bzw. mit möglichst sanftem Übergang.
Gemäß einer weiteren bevorzugten Ausführungsform weist die Vorrichtung gemäß der Erfindung ein oder mehrere Leitblech auf, die oberhalb des Förderers zum Abführen des Stückguts angeordnet und zum Ablenken des dem Förderer zugeführten Stückgutes in Förderrichtung angepasst sind. Vorzugsweise ist das bzw. sind die Leitbleche mittig über dem Förderband angeordnet. Vorzugsweise ist sodann jeder Förderrampe (bei der Verwendung mehrerer Förderrampen) eine Hälfte der Bandbreite für die jeweils abzugebenden Stückgüter zugewiesen. Das Auftreten von Paketstaus auf dem Förderer zum Abführen des Stückguts wird hierdurch weiter eingedämmt, weil jeder Förderrampe ein bestimmter Bereich des Förderbandes zugeordnet werden kann, und die Geschwindigkeit des Förderbandes entsprechend einstellbar ist.

Die Erfindung löst die ihr zugrunde liegende Aufgabe bei einem Verfahren gemäß dem Anspruch 10. Das Verfahren, insbesondere unter Verwendung einer Vorrichtung nach einem der Ansprüche 1 bis 9, umfasst die Schritte: Bereitstellen des Ladungsträgers in einer Aufnahme, Bringen einer Förderrampe und der seitlichen Auslassöffnung des Ladungsträgers in Anlage miteinander, Schwenken der Aufnahme und der Förderrampe in eine zur Horizontalen geneigte Stellung, in welcher die Förderrampe sich in Anlage mit der seitlichen Auslassöffnung des Ladungsträgers befindet, Bewegen der Aufnahme und der mit dem Ladungsträger in Anlage befindlichen Förderrampe in der geneigten Stellung derart relativ zu einander, dass die Aufnahme und der Förderer einander angenähert werden, und Abführen des Stückguts aus dem Ladungsträger, welches infolge der Relativbewegung durch die freiwerdende Auslassöffnung hindurchtritt, mittels eines zwischen der ersten und/oder zweiten Förderrampe und dem Förderer angeordneten Förderbandes, zur Überführung des Stückgutes von dem Ladungsträger in Richtung des Förderers.

Die Aufnahme und die Förderrampe werden vorzugsweise gemeinsam in eine zur horizontalen geneigte Stellung geschwenkt. Die Förderrampe wird hierbei vorzugsweise mit der seitlichen Auslassöffnung des Ladungsträgers in Anlage gebracht, insbesondere in eine vertikale Stellung geschwenkt. Optional geschieht dies bereits, bevor die Aufnahme den Ladungsträger empfängt. Bei einer solchen Vorgehensweise ist die Anlage der Förderrampe und der seitlichen Auslassöffnung des Ladungsträgers aneinander bereits hergestellt, wenn der Ladungsträger seine endgültige Position an bzw. auf der Aufnahme erreicht hat.

Das erfindungsgemäße Verfahren wird dadurch vorteilhaft weitergebildet, dass die Aufnahme mittels einer Antriebseinheit in der geneigten Stellung entlang der Förderrampe verfahren wird.

Weiter vorzugsweise umfasst das Verfahren gemäß der vorliegenden Erfindung einen, mehrere oder sämtliche der Schritte: Antreiben der Förderrampe im Wesentlichen synchron zu der Bewegung relativ zu der Aufnahme, Hin- und Herbewegen einer zwischen der Förderrampe und dem Förderer zum Abführen des Stückguts angeordneten Sammel-Wippe zwischen einer, vorzugsweise horizontalen, Sammel-Stellung und einer, vorzugsweise geneigten, Freigabe-Stellung, Transport des Ladungsträgers in einer horizontalen Ebene bis zu einem Anschlagpunkt und Koppeln mit der Förderrampe bei Erreichen des Anschlagpunktes, Abbremsen des abgeführten Stückguts, und/oder Einstellen der Höhe und/oder des Winkels des Förderers zum Abführen des Stückguts, vorzugsweise angepasst an eine Verfahrbewegung der Förderrampe, und/oder Antreiben des Förderbandes (67) mit einer gleichen oder höheren Geschwindigkeit als der relativen Geschwindigkeit zwischen der ersten und/oder zweiten Aufnahme und der ersten und/oder zweiten Förderrampe.
Das erfindungsgemäße Verfahren wird vorzugsweise weitergebildet durch die Schritte: Absenken der angehobenen, mit der ersten oder zweiten Förderrampe in Anlage befindlichen, zur Horizontalen geneigten Aufnahme, wenn ein Verkeilen von Stückgut festgestellt wird, Bringen der anderen Förderrampe und der anderen seitlichen Auslassöffnung des Ladungsträgers in Anlage miteinander, Schwenken der Aufnahme in eine entgegengesetzte, zur Horizontalen geneigte Stellung, und erneutes Anheben der Aufnahme relativ zur der nun in Anlage befindlichen Förderrampe.

Im Folgenden wird die Erfindung anhand bevorzugter Ausführungsbeispiele und unter Bezugnahme auf die beigefügten Figuren näher erläutert. Hierbei zeigen:
- Figur 1: eine räumliche Prinzipdarstellung einer Vorrichtung gemäß einem ersten Ausführungsbeispiel,
- Figur 2: eine Seitenansicht der Vorrichtung gemäß Figur 1,
- Figur 3: eine Seitenansicht der Figur gemäß Figuren 1 und 2 in einer alternativen Betriebsstellung,
- Figur 4: eine räumliche Darstellung der Vorrichtung gemäß den Figuren 1 bis 3 in der Stellung gemäß Figur 3,
- Figur 5: eine Seitenansicht einer Vorrichtung nach einem zweiten Ausführungsbeispiel,
- Figur 6: eine räumliche Darstellung der Vorrichtung gemäß Figur 5,
- Figur 7: eine räumliche Darstellung einer Weiterbildung der Vorrichtungen gemäß erstem und zweitem Ausführungsbeispiel, und
- Figur 8: eine räumliche Darstellung einer weiteren Weiterbildung der Vorrichtungen gemäß der vorliegenden Erfindung,
- Figur 9: eine räumliche Darstellung einer Weiterbildung der Vorrichtung gemäß einem dritten Ausführungsbeispiel,
- Figur 10: eine weitere räumliche Darstellung der Vorrichtung gemäß drittem Ausführungsbeispiel, und
- Figur 11: eine weitere räumliche Darstellung der Vorrichtung gemäß dem dritten Ausführungsbeispiel.

Es werden für alle drei im Detail beschriebenen Ausführungsbeispiele für identische oder der Funktion nach ähnliche Elemente identische Bezugszeichen vergeben. Insoweit wird bezüglich dieser Bezugszeichen bei Fehlen einer expliziten Nennung im Text auf die jeweils anderen Figuren ausdrücklich verwiesen.

Wenngleich bestimmte Merkmale nur in Bezug auf eines der drei Ausführungsbeispiele gezeigt und beschrieben werden, so wird verstanden und vorausgesetzt, dass die Merkmale jeweils auch mit der Ausführungsform der jeweils anderen Ausführungsbeispiels in sinnfälliger Weise kombinierbar sind.

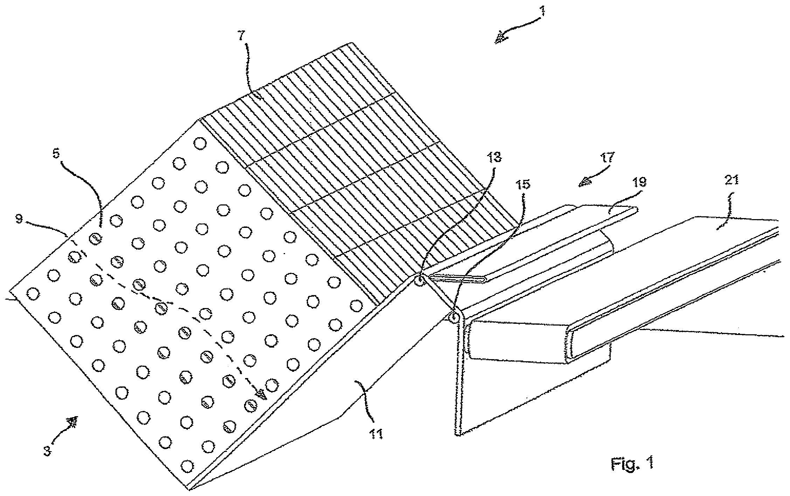

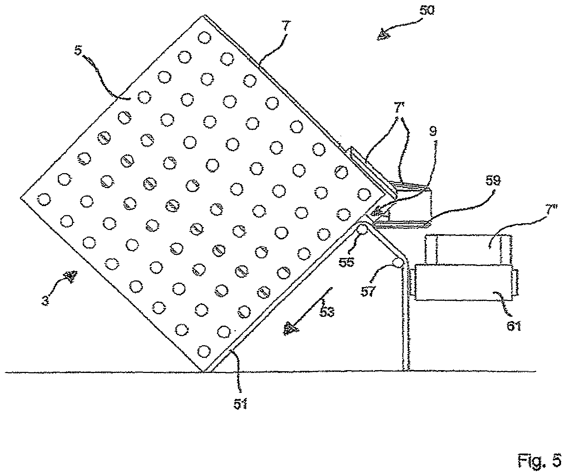

Eine Vorrichtung zum Entleeren eines mit Stückgut, insbesondere in Form Packstücken, beladenen Ladungsträgers, welcher eine seitliche Auslassöffnung zur Entnahme des Stückguts aufweist, ist in den Figuren 1 bis 4 für ein erstes Ausführungsbeispiel dargestellt. Die gezeigte Vorrichtung 1 weist einen unteren Bereich 3 auf, in welchem eine (nicht dargestellte) Aufnahme für einen Ladungsträger 5 angeordnet ist. In Figur 5 ist eine Betriebsstellung der Vorrichtung 1 gezeigt, in welcher sich der Ladungsträger 5 bereits auf der Aufnahme befindet. Der Ladungsträger 5 ist mit einer Vielzahl von Stückgut in Form von Packstücken 7 beladen. Der Einfachheit der Darstellung halber sind die Pakete in Figur 1 als identisch große Elemente angedeutet, wenngleich in einer realen Ladesituation zu erwarten ist, dass die einzelnen Größen der Packstücke sich deutlich voneinander unterscheiden. Der Ladungsträger 5 weist eine Seite mit einer seitlichen Auslassöffnung 9 auf, die in der in Figur 1 gezeigten Stellung verdeckt ist. Die Fläche mit der seitlichen Auslassöffnung 9 befindet sich in Anlage mit einer Förderrampe 11. Die Förderrampe 11 gemäß dem ersten Ausführungsbeispiel ist als Förderband ausgebildet. Die Förderrampe wird über eine erste Förderwalze 13 und eine zweite Förderwalze 15, sowie gegebenenfalls weiteren (nicht dargestellten) Förderwalzen umlaufend angetrieben. Die in dem Bereich 3 angeordnete Aufnahme und der Ladungsträger befinden sich gemeinsam mit der Förderrampe 11 in einer zur Horizontalen geneigten Stellung, so dass die in dem Ladungsträger 5 angeordneten Packstücke 7 aufgrund der Schwerkraft teilweise in Anlage mit der Förderrampe 11 stehen und gegen diese leicht gedrückt werden. Da die Förderrampe 11 die seitliche Auslassöffnung 9 in der in Figur 1 gezeigten Stellung vollständig verdeckt, können keine Packstücke 7 aus dem Ladungsträger 5 austreten.

In einem oberen Bereich 17 der Vorrichtung 1 befindet sich eine Sammel-Wippe 19. Die Sammel-Wippe 19 ist zumindest der ersten Walze 13 nachgeschaltet. Die Sammel-Wippe ist dazu eingerichtet, aus dem Ladungsträger 5 austretende Packstücke 7 zunächst in einer (in Figur 1 gezeigten) Sammel-Stellung zu sammeln, und bei Bedarf, optional automatisiert oder manuell, durch Klappen der Sammel-Wippe 19 in eine zur horizontalen geneigte Freigabestellung an einen Förderer 21 zum Abführen des Stückguts zu übergeben. Der Förderer 21 ist gemäß erstem Ausführungsbeispiel als Förderband ausgebildet. Optional schließen sich an das gezeigte Förderband weitere Förderbänder oder Fördermittel an. Die Sammel-Wippe ist gemäß gezeigtem Ausführungsbeispiel ebenfalls als Förderband ausgebildet, kann alternativ aber auch als Rutsche oder Anordnung mehrerer Rollen ausgebildet sein.

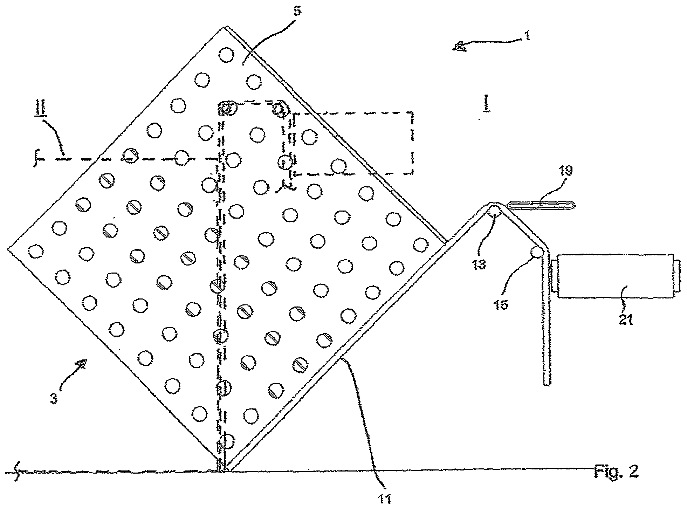

In Figur 2 sind verschiedene Betriebsstellungen der Vorrichtung 1 und des Ladungsträgers 5 dargestellt. Gemäß den durchgezogenen Linien befindet sich die Vorrichtung 1 inklusive der Aufnahme in dem Bereich 3 und der Förderrampe 11 in einer zur horizontalen geneigten Stellung I. Der Ladungsträger 5 sowie die Vorrichtung 1 sind zwischen der gezeigten Stellung I und einer durch Strichlinien angedeuteten Stellung II hin- und herbewegbar, insbesondere schwenkbar. Dies geschieht optional im Einklang miteinander, wenn der Ladungsträger sich auf der Aufnahme befindet oder an dieser befestigt ist, oder separat zueinander, wenn beispielsweise der Ladungsträger 5 noch nicht auf der Aufnahme positioniert ist oder die Förderrampe relativ zu der Aufnahme schwenkbar ist und noch mit dem Ladungsträger 5 und dessen seitlicher Auslassöffnung 9 (siehe Figur 1) in Anlage zu bringen ist.

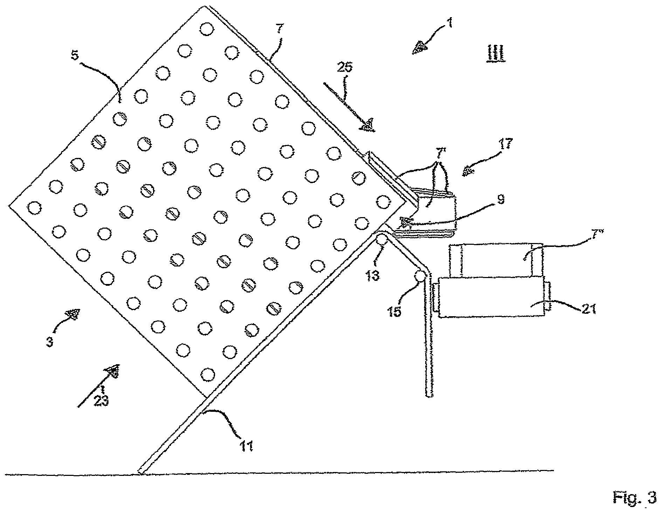

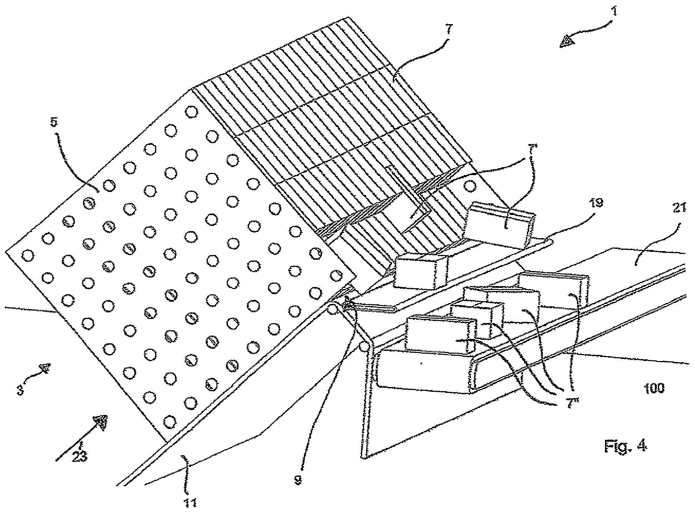

Die in den Figuren 3 und 4 gezeigte Betriebsstellung der Vorrichtung 1 entspricht einer dritten Stellung III der Vorrichtung 1. In dieser Stellung ist die Aufnahme mit dem Bereich 3 und dem Ladungsträger 5 relativ zu der Förderrampe 11 bewegt. Im gezeigten ersten Ausführungsbeispiel ist hierdurch der Ladungsträger 5 von einem Bereich des Bodens 100 relativ zu den Stellungen I und II (siehe Figur 2) entfernt worden, dafür aber dem oberen Bereich 17 der Vorrichtung 1, in welchem die Sammel-Wippe und der Förderer 21 angeordnet sind, angenähert. Die Relativbewegung wird dadurch realisiert oder unterstützt, dass die Förderrampe 11 als Förderer ausgebildet ist und entlang der Wand des Ladungsträgers mit der seitlichen Auslass-Öffnung 9 abwälzt. Die Höhe der Förderrampe 11 bleibt hierbei unverändert, die Aufnahme und der Ladungsträger 5 werden mit gleicher Geschwindigkeit, wie sich das Band der Förderrampe 11 bewegt, nach oben gefördert. Durch die in Figur 3 angedeutete Relativbewegung in Richtung des Pfeils 23 befindet sich die seitliche Auslass-Öffnung 9 nicht mehr vollständig in Überdeckung mit der Förderrampe 11. Es ist in einem oberen Bereich ein Spalt freigegeben, welcher das Durchtreten von Packstücken 7 (in der Position 7' gezeigt), aus dem Ladungsträger 5 heraus ermöglicht. Die Packstücke 7 werden in der Position 7' von der Sammei-Wippe zunächst gesammelt und intermittierend an den Förderer 21 abgegeben, so dass sie in Position 7" auftreffen und abgeführt werden.

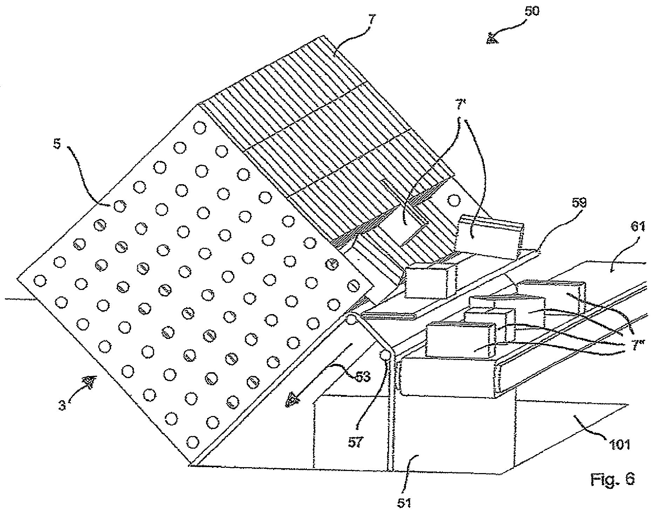

Die Figuren 5 und 6 zeigen eine Vorrichtung 50 zum Entleeren eines mit Stückgut beladenen Ladungsträgers gemäß einem zweiten Ausführungsbeispiel. Die Vorrichtung 50 stimmt in wesentlichen strukturellen Bestandteilen mit der Vorrichtung 1 gemäß den Figuren 1 bis 4 überein. Daher wird bezüglich der übereinstimmenden Bezugszeichen auf die obigen Ausführungen verwiesen.

Im Unterschied zu Vorrichtung 1 gemäß den Figuren 1 bis 4 ist die Aufnahme in dem Bereich 3 mit bzw. ohne Ladungsträger 5 zwar zwischen einer Stellung I und II (siehe Figur 2) hin- und herbewegbar, insbesondere schwenkbar, allerdings nicht in der Höhe verfahrbar. Das Herbeiführen einer Relativbewegung zwischen der Aufnahme und der mit dem Ladungsträger in Anlage befindlichen Förderrampe (hier als Förderrampe 51 bezeichnet) wird dadurch herbeigeführt, dass die Förderrampe 51 in Richtung des Pfeils 53 verfahrbar ist. Durch diese Verfahrbewegung wird eine Sammel-Wippe 59 und ein Förderer 61 zum Abführen des Stückguts abwärts bewegt. Hierdurch wird die Überdeckung der seitlichen Auslassöffnung des Ladungsträgers 5 mit der Förderrampe 51 sukzessive aufgehoben, wodurch ein Spalt der seitlichen Auslassöffnung 9 freigegeben wird, durch welchen Packstücke 7 zunächst in die Position 7' und schließlich in die Position 7" austreten können. Die Verfahrbewegung der Förderrampe 51 in Richtung des Pfeils 53 wird optional dadurch gewährleistet, dass die Förderrampe 51 wie auch die Förderrampe 11 als Förderer ausgebildet ist und auf der seitlichen Fläche mit der seitlichen Auslassöffnung 9 des Ladungsträgers abwälzt und gemäß einer weiteren Option wird die Förderrampe 51 als starrer Körper mit einer gleitenden Seitenfläche ausgebildet, der schräg nach unten verfahrbar ist.

Wie bereits in Bezug auf das erste Ausführungsbeispiel dargelegt, ist auch die Förderrampe 51 zwischen mehreren Betriebsstellungen schwenkbar, um mit dem auf der Aufnahme bereitgestellten Ladungsträger 5 in Anlage gebracht zu werden.

Im Folgenden wird unter Bezugnahme auf die Figuren 1 bis 6 das Verfahren zum Entleeren des Ladungsträgers erläutert. Gemäß beider bevorzugter Ausführungsbeispiele des Verfahrens wird zunächst ein Ladungsträger 5 bereitgestellt. Der Ladungsträger 5 befindet sich in einer nicht-geneigten Position, die in etwa Stellung II aus Figur 2 entspricht. Der derart positionierte Ladungsträger wird mit der Aufnahme in dem Bereich 3 der Vorrichtung 1, 50 verbunden bzw. dorthin verbracht und mit der Aufnahme für die weiteren Verarbeitungsschritte gekoppelt. Optional wird die Förderrampe 11, 51 in eine Stellung II gemäß Figur 2 gebracht, insbesondere verschwenkt, um eine Anlage mit der Seitenfläche des Ladungsträgers zu bilden.

Der Ladungsträger 5 ist hierbei entweder von vornherein mit einer offenen Seitenwand ausgebildet, oder weist eine Verschlusswand auf, die vor dem Inanlagebringen der Förderrampe 11, 51 entfernt wird. Das Bewegen der Förderrampe 11, 51 in eine Position, die das Inanlagebringen mit dem Ladungsträger 5 ermöglicht, ist auch bereits vor dem Annähern des Ladungsträgers 5 an die Aufnahme möglich.

In einem nächsten Schritt werden der Ladungsträger 5 auf der Aufnahme und die Förderrampe 11, 51 in eine zur horizontalen geneigten Stellung (siehe Stellung I in Figur 2) gebracht, insbesondere geschwenkt. Wenngleich es optional möglich ist, das Verschwenken separat durchzuführen, wird es als besonders bevorzugt angesehen, die Schwenkbewegung vorzunehmen, wenn beide Teile - der Ladungsträger 5 und die Förderrampe 11, 51 - bereits in Anlage gebracht sind.

Wenn sich der Ladungsträger 5 mit der Ausnahme und die Förderrampe 11, 51 in der zur horizontal geneigten Stellung befinden, wird eine Relativbewegung zwischen der Aufnahme und der Förderrampe herbeigeführt. Dies geschieht entweder gemäß erstem Ausführungsbeispiel dadurch, dass die Aufnahme mit dem Ladungsträger 5 verfahren wird, oder dadurch, dass die Förderrampe 51 relativ zu der Aufnahme und dem Ladungsträger 5 gemäß dem zweiten Ausführungsbeispiel verfahren wird. Gemäß einer dritten bevorzugten Alternative werden beide Bewegungen kombiniert. Bei einer Relativbewegung gemäß dem zweiten Ausführungsbeispiel wird vorzugsweise die Förderrampe 51 in Richtung einer unteren Öffnung 101 im Bereich des Bodens 100 versenkt.

Durch das Erzeugen der Relativbewegung zwischen Aufnahme und Förderrampe wird die seitliche Auslassöffnung 9 bzw. ein Bereich davon Stück für Stück von der Förderrampe 11 freigegeben, d.h. durch diese nicht länger verdeckt. Dadurch werden zunächst die oben im Ladungsträger angeordneten Packstücke 7 zum Durchtreten der seitlichen Auslassöffnung freigegeben und erreichen, optional über eine Sammel-Wippe 19, 59, den Förderer 21, 61, von welchem sie zur weiteren Verarbeitung abgeführt werden. Im Anschluss an ein vollständiges Entleeren des Ladungsträgers 5 wird die Bewegungsrichtung der Aufnahme und der Förderrampe relativ zueinander umgekehrt, der Ladungsträger und die Aufnahme mit dem Bereich 3 wieder nach unten überführt und in die ursprüngliche Stellung zurückbewegt, so dass der Ladungsträger entfernt und ein neuer Ladungsträger eingesetzt werden kann.

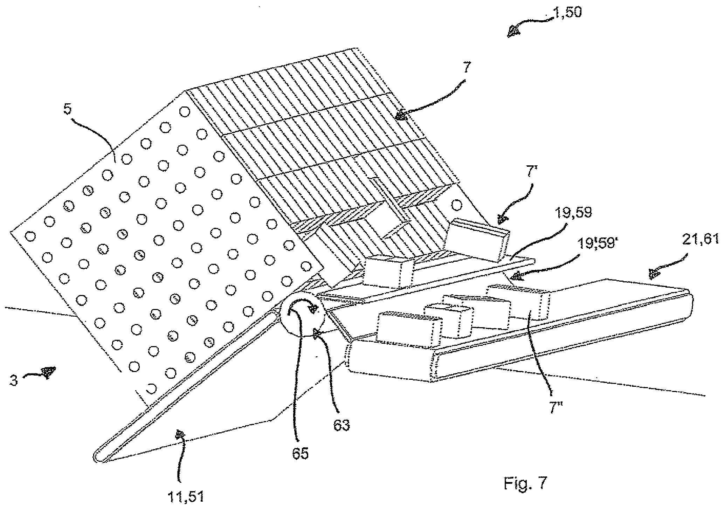

Figur 7 zeigt eine schematische, vereinfachte Darstellung der Vorrichtung gemäß dem ersten und zweiten Ausführungsbeispiel. Der Aspekt der Relativbewegung, welcher in den vorausgehenden Figuren beschrieben worden ist, ist hier zur besseren Übersicht weggelassen worden. Die in Figur 7 gezeigte Vorrichtung 1, 50 unterscheidet sich im Wesentlichen darin von den in den Figuren 1 bis 6 gezeigten Ausführungsformen, dass eine Förderrolle 63 vorgesehen. Die Förderrolle 63 ist zwischen der Förderrampe 11, 51 an dessen oberen Ende und der Sammeiwippe 19, 59 angeordnet. Die Förderrolle 63 wird in Richtung des Pfeils 65 rotatorisch angetrieben. Die Förderrolle 63 wird mit einer Drehzahl angetrieben, die auf der Rollenoberfläche zu einer Bandgeschwindigkeit führt, welche gleich der Bandgeschwindigkeit der Förderrampe 11, 51 ist oder größer als diese. Hierdurch wird erreicht, dass das an der Förderrolle 63 anliegende Stückgut beschleunigt aus dem Inneren des Ladungsträgers 5 heraus in Richtung des Förderers 21, 61 abgeführt wird. Vorzugsweise ist die Bandgeschwindigkeit der Oberfläche der Förderrolle 63 größer als die Bandgeschwindigkeit der Förderrahme 11, 51.

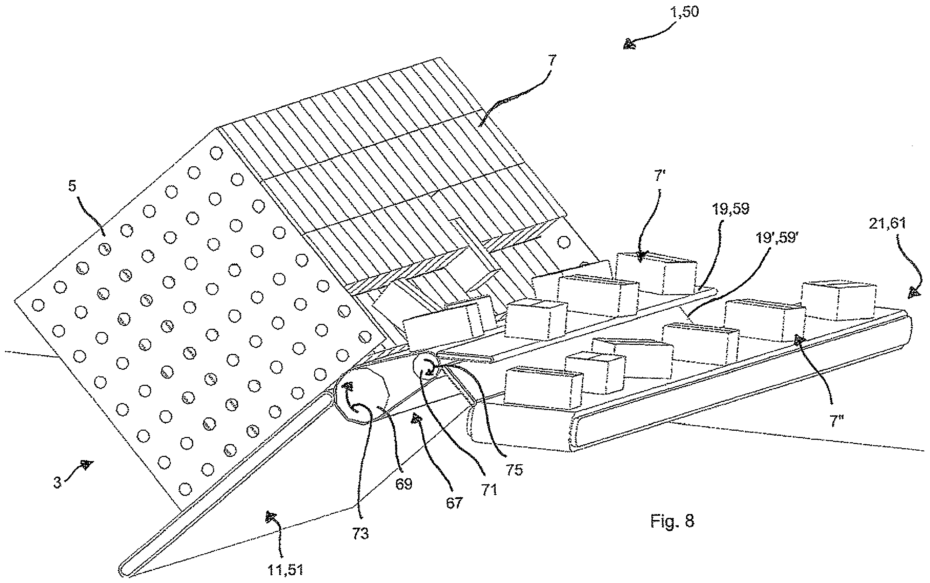

Zusätzlich ist in den Figuren 7 und 8 zu erkennen, dass die Sammel-Wippe 19, 59 von einer im Wesentlichen horizontalen Ausrichtung in eine in Richtung des Förderers 21, 61 zum Abführen des Stückguts geneigte Stellung, angedeutet durch Bezugszeichen 19', 59', verschwenkt werden kann.

In Figur 8 ist eine Ausführungsform der erfindungsgemäßen Vorrichtung 1, 50 dargestellt. Die Vorrichtung ähnelt strukturell der in Figur 7 gezeigten Vorrichtung, unterscheidet sich von dieser insbesondere aber darin, dass nicht eine einzelne Förderrolle 63 (Figur 7), sondern ein Förderband 67 zum Umlenken und Abführen des Stückguts aus dem Ladungsträger 5 vorgesehen ist. Das Förderband 67 ist zwischen der Förderrampe 11, 51 an deren oberem Ende und der Sammel-Wippe 19, 59 bzw. dem Förderer 21, 61 zum Abführen des Stückguts angeordnet. Das Förderband 67 ist umlaufend um eine erste Rolle 69 und eine zweite Rolle 71 angeordnet, vorzugsweise gespannt. Die erste und/oder zweite Rolle 69, 71 ist mit einer Drehzahl in Richtung der Pfeile 73, 75 angetrieben, welche eine Bandgeschwindigkeit des Förderbandes 27 erzeugt, die gleich der Bandgeschwindigkeit der Förderrampe 11, 51 ist oder diese übersteigt. Vorzugsweise ist die Bandgeschwindigkeit des Förderbandes 67 größer als die Bandgeschwindigkeit der Förderrampe 11, 51, und zwar aus den bereits hinsichtlich der Förderrolle 63 in Figur 7 beschriebenen Auswirkungen. Aufgrund der größeren Auflagefläche des Stückguts auf dem Förderband im Vergleich zur Förderrolle erfolgt gemäß dieser Ausführungsform die Abführung des Stückguts in Richtung des Förderers 21, 61 noch effektiver. Die erste Rolle 69 und/oder die zweite Rolle 71 sind vorzugsweise höhenverstellbar, so dass der Winkel der dem Stückgut zugewandten Seite des Förderbandes 67 verstellbar ist.

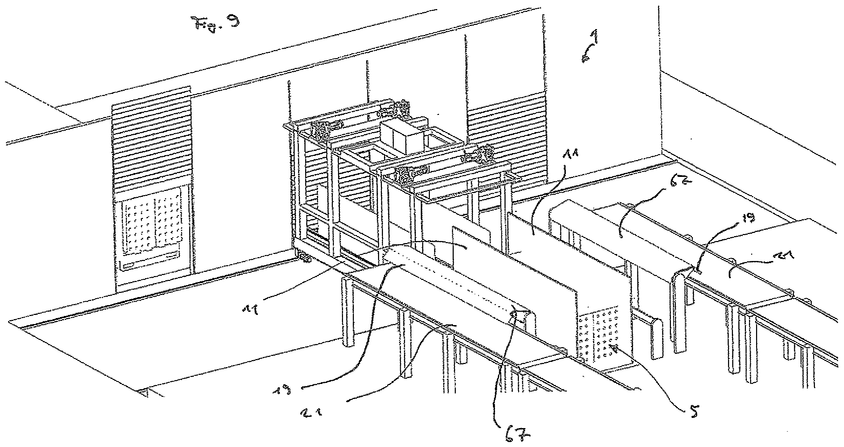

In den Figuren 9 bis 11 wird ein drittes Ausführungsbeispiel der Vorrichtung veranschaulicht. Bezüglich der technischen Merkmale und des strukturellen Aufbaus herrscht weitgehend Übereinstimmung mit den Vorrichtungen gemäß dem ersten und zweiten Ausführungsbeispiel und insbesondere herrscht eine Ähnlichkeit mit dem ersten Ausführungsbeispiel, bei welchem die Aufnahme mit dem Ladungsträger fünf relativ zu der Förderrampe aufwärts bewegt wird.

Die gleichen oder strukturell oder funktional ähnlich Merkmale sind deshalb bei dem dritten Ausführungsbeispiel mit demselben Bezugszeichen versehen, wie vorstehend in Bezug auf das erste und zweite Ausführungsbeispiel beschrieben.

Die Vorrichtung 1 gemäß dem dritten Ausführungsbeispiel unterscheidet sich insbesondere dadurch von dem zuvor beschriebenen Ausführungsbeispielen, dass sie eine einzige Aufnahme aufweist, welche beidseits eine erste und zweite Förderrampe 11 und einen ersten und zweiten Förderer 21 aufweist. Die Aufnahme ist dazu eingerichtet, wahlweise den ersten oder zweiten Förderer 21 durch Inanlagebringen mit der jeweiligen Förderrampe 11 mit Stückgut 7 zu versorgen.

Da der strukturelle Aufbau der Vorrichtung gemäß dem dritten Ausführungsbeispiel unter Einbeziehung der Ausführungen zu dem ersten und zweiten Ausführungsbeispiel selbsterklärend ist, wird in Bezugnahme auf die Figuren 9 bis 11 insbesondere auf den Ablauf des Verfahrens gemäß dem dritten Ausführungsbeispiel eingegangen.

In Figur 9 ist ein Ladungsträger 5 innerhalb einer Aufnahme der erfindungsgemäßen Vorrichtung 1 gezeigt. Der Ladungsträger 5 weist an seinen Stirnseiten jeweils Ladeflächenbegrenzungen auf. An seinen Seitenflächen ist der Ladungsträger 5 in Anlage mit zwei Förderrampen 11 bringbar, die als eine erste und zweite Förderrampe fungieren. Neben den Förderrampen 11 sind beidseits jeweils Förderbänder 67 angeordnet. Die Förderbänder 67 sind jeweils antreibbar.

Damit Stückgut aus dem Ladungsträger 5 auf einen ersten oder zweiten Förderer 21, optional mittels Überführung über eine Wippe 19, gefördert werden kann, muss ausgehend von dem in Figur 9 gezeigten Zustand der Ladungsträger 5 in Richtung eines der beiden Förderer 21 verlagert werden.

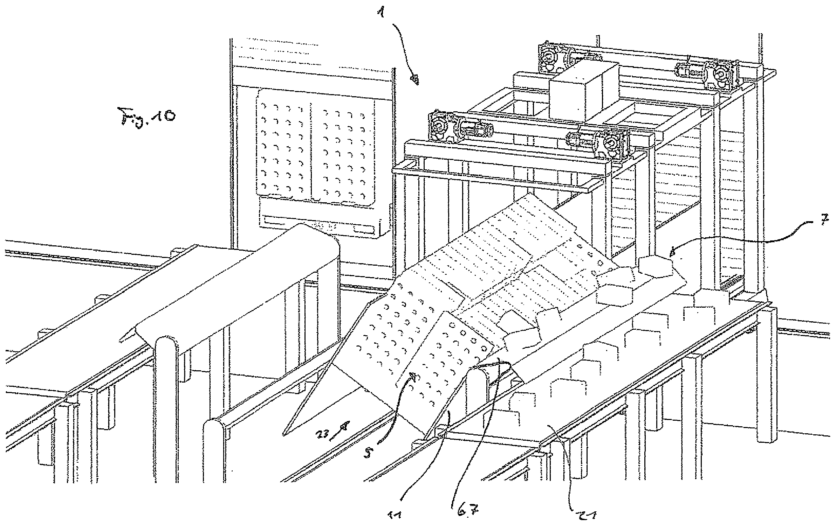

Hierzu wird der Ladungsträger zusammen mit wenigstens einer, vorzugsweise beiden Förderrampen 11 in eine zur horizontalen geneigte Stellung gebracht. Anschließend kann der Ladungsträger 5 in der geneigten Position angehoben werden. Dies zeigt Figur 10, in welcher der Ladungsträger 5 in Richtung des Pfeils 23 zu einem der beiden Förderbänder 67 hinbewegt wird.

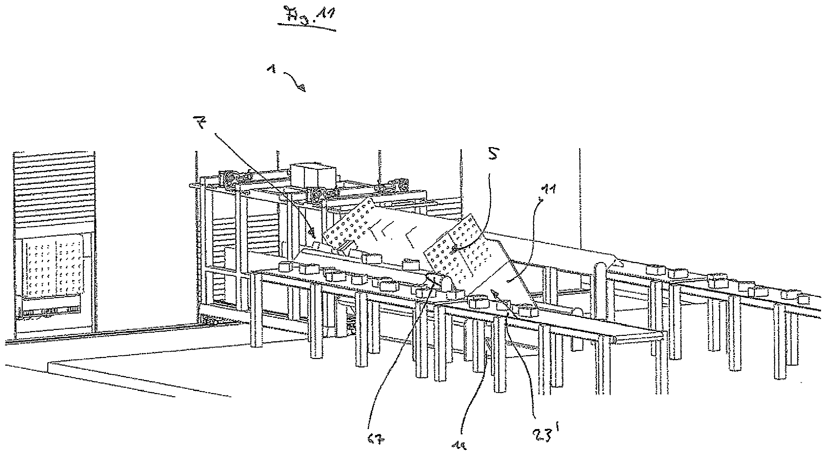

Kommt es beispielsweise zu einem Verkanten von Stückgut innerhalb des Ladungsträgers in einem oberen Bereich, welcher in der Nähe des Förderbandes 67 liegt, ist es gemäß dem dritten Ausführungsbeispiel möglich, die Richtung zu wechseln, in welcher Stückgut auf die Förderbänder 21 abgegeben wird. Hierzu wird der Ladungsträger 5 von dem in Figur 10 gezeigten Zustand vorzugsweise wieder teilweise oder vollständig abgesenkt, wodurch sich nach Zurückkippen in die Ausgangslage wieder der Zustand gemäß Figur 9 ergibt. Im Anschluss wird vorzugsweise der Ladungsträger 5 in Richtung der anderen Förderrampe in einer horizontalen geneigte Stellung gebracht und erneut angehoben, was in Figur 11 durch den Pfeil 23' angedeutet ist. In dieser Stellung können die Stückgüter 7, die zuvor in der Stellung gemäß Figur 10 verkantet waren und nicht an vor ihnen liegenden Stückgütern vorbei konnten, problemlos auf den zweiten Förderer 21 abgeladen werden, welcher spiegelbildlich auf der dem anderen Förderer 21 gegenüberliegenden Seite angeordnet ist. Bei einem erneuten Verkanten weiter hinten liegender Stückgüter wird das Verfahren in umgekehrter Reihenfolge wiederholt.

## Patentansprüche

1. Vorrichtung (1, 50) zum Entleeren eines mit Stückgut, insbesondere in Form von Packstücken (7), beladenen Ladungsträgers (5), welcher eine seitliche Auslassöffnung (9) zur Entnahme des Stückguts aufweist, mit
- einer Aufnahme für den Ladungsträger (5), und
- einem Förderer (21, 61) zum Abführen des Stückguts, wobei
- die Vorrichtung (1, 50) eine dem Förderer (21, 61) vorgeschaltete Förderrampe (11, 51) aufweist, wobei die Förderrampe (11, 51) und die seitliche Auslassöffnung (9) des Ladungsträgers (5) miteinander in Anlage bringbar sind,
- die Aufnahme und die Förderrampe (11, 51) in eine zur Horizontalen geneigte Stellung schwenkbar sind, in welcher die Förderrampe (11, 51) sich in Anlage mit der seitlichen Auslassöffnung (9) des Ladungsträgers (5) befindet, und
- die Aufnahme und die mit dem Ladungsträger (5) in Anlage befindliche Förderrampe (11, 51) in der geneigten Stellung derart relativ zueinander bewegbar sind, dass die Aufnahme und der Förderer (21, 61) einander angenähert werden.
**dadurch gekennzeichnet, dass**
zwischen der Förderrampe (11,51) und dem Förderer (21,61) zum Abführen des Stückguts ein Förderband (67) zur Überführung des Stückgutes von dem Ladungsträger in Richtung des Förderers (21,61) angeordnet ist.

2. Vorrichtung nach Anspruch 1, für einen Ladungsträger, der eine der ersten seitlichen Auslassöffnung (9) gegenüberliegende zweite seitliche Auslassöffnung aufweist,
**dadurch gekennzeichnet, dass** die Förderrampe (11,51) eine erste Förderrampe ist, der Förderer (21,61) ein erster Förderer ist, und die Vorrichtung weiter einen zweiten Förderer zum Abführen des Stückguts sowie eine dem zweiten Förderer vorgeschaltete zweite Förderrampe aufweist, wobei
die zweite Förderrampe und die zweite seitliche Auslassöffnung des Ladungsträgers (5) miteinander in Anlage bringbar sind,
- die Aufnahme und die zweite Förderrampe in eine zur Horizontalen geneigte Stellung schwenkbar sind, in welcher die zweite Förderrampe sich in Anlage mit der zweiten seitlichen Auslassöffnung des Ladungsträgers (5) befindet, und
- die Aufnahme und die mit dem Ladungsträger (5) in Anlage befindliche zweite Förderrampe (11, 51) in der geneigten Stellung derart relativ zueinander bewegbar sind, dass die Aufnahme und der zweite Förderer einander angenähert werden.

3. Vorrichtung nach Anspruch 2,
**dadurch gekennzeichnet, dass** die Aufnahme zwischen der ersten Förderrampe und der zweiten Förderrampe angeordnet und wahlweise in Richtung der ersten oder zweiten Förderrampe schwenkbar ist.

4. Vorrichtung nach einem der vorstehenden Ansprüche,
**dadurch gekennzeichnet, dass** der Förderer (21, 61) zum Abführen des Stückguts ein oder mehrere Förderbänder oder ein oder mehrere Förderrutschen aufweist.

5. Vorrichtung nach einem oder mehreren der vorstehenden Ansprüche,
**dadurch gekennzeichnet, dass** der Förderer (21, 61) zum Abführen des Stückguts Mittel zum Abbremsen des abgeführten Stückguts aufweist.

6. Vorrichtung nach einem der vorstehenden Ansprüche,
**dadurch gekennzeichnet, dass** der Förderer (21, 61) zum Abführen des Stückguts in der Höhe und/oder im Winkel einstellbar ist, vorzugsweise angepasst an eine Verfahrbewegung der Förderrampe (11, 51), bzw. der ersten und/oder zweiten Förderrampe (11, 51).

7. Vorrichtung nach einem der vorstehenden Ansprüche,
**gekennzeichnet durch** eine Rütteleinrichtung, die zum Erzeugen von Vibrationen der Aufnahme, des Ladungsträgers (5), und/oder der Förderrampe (11, 51), bzw. ersten und/oder zweiten Förderrampe (11, 51) eingerichtet ist.

8. Vorrichtung nach Anspruch 1,
**dadurch gekennzeichnet, dass** das Förderband (67) mit einer höheren Geschwindigkeit als die relative Geschwindigkeit zwischen der Aufnahme und der Förderrampe antreibbar ist.

9. Vorrichtung nach einem der vorstehenden Ansprüche, **gekennzeichnet durch** ein oder mehrere Leitbleche, die oberhalb des Förderers (21, 61) angeordnet und zum Ablenken des dem Förderer zugeführten Stückgutes in Förderrichtung angepasst sind.

10. Verfahren zum Entleeren eines mit Stückgut, insbesondere in Form von Packstücken (7), beladenen Ladungsträgers (5), welcher eine seitliche Auslassöffnung (9) zur Entnahme des Stückguts aufweist, insbesondere unter Verwendung einer Vorrichtung (1, 50) nach einem der Ansprüche 1 bis 9, umfassend die Schritte:
- Bereitstellen des Ladungsträgers (5) in einer ersten und/oder zweiten Aufnahme,
- Bringen einer ersten und/oder zweiten Förderrampe (11, 51) und der seitlichen Auslassöffnung (9) des Ladungsträgers (5) in Anlage miteinander,
- Schwenken der ersten und/oder zweiten Aufnahme und der ersten und/oder zweiten Förderrampe (11, 51) in eine zur Horizontalen geneigte Stellung, in welcher die erste und/oder zweite Förderrampe (11, 51) sich in Anlage mit der seitlichen Auslassöffnung (9) des Ladungsträgers befindet,
- Bewegen der Aufnahme und der mit dem Ladungsträger (5) in Anlage befindlichen ersten und/oder zweiten Förderrampe (11, 51) in der geneigten Stellung derart relativ zu einander, dass die erste und/oder zweite Aufnahme und ein Förderer (21, 61) einander angenähert werden, und
- Abführen des Stückguts aus dem Ladungsträger (5), welches infolge der Relativbewegung durch die freiwerdende Auslassöffnung (9) hindurchtritt, mittels eines zwischen der ersten und/oder zweiten Förderrampe und dem Förderer (21, 61) angeordneten Förderbandes (67), zur Überführung des Stückgutes von dem Ladungsträger in Richtung des Förderers (21, 61).

11. Verfahren nach Anspruch 10,
wobei die Aufnahme mittels einer Antriebseinheit in der geneigten Stellung entlang der Förderrampe (11) verfahren wird.

12. Verfahren nach einem der Ansprüche 10 und 11,
umfassend einen, mehrere oder sämtliche der Schritte:
- Antreiben der ersten und/oder zweiten Förderrampe (11, 51) im Wesentlichen synchron zu der Bewegung relativ zu der Aufnahme,
- Hin- und Herbewegen einer zwischen der ersten und/oder zweiten Förderrampe (11, 51) und dem Förderer (21, 61) zum Abführen des Stückguts angeordneten Sammel-Wippe (19, 59) zwischen einer, vorzugsweise horizontalen, Sammel-Stellung und einer, vorzugsweise geneigten, Freigabe-Stellung,
- Transport des Ladungsträgers (5) in einer horizontalen Ebene bis zu einem Anschlagpunkt und Koppeln mit der ersten und/oder zweiten Förderrampe (11, 51) bei Erreichen des Anschlagpunktes,
- Abbremsen des abgeführten Stückguts, und/oder
- Einstellen der Höhe und/oder des Winkels des Förderers (21, 61) zum Abführen des Stückguts, vorzugsweise angepasst an eine Verfahrbewegung der ersten und/oder zweiten Förderrampe (51), und/oder
- Antreiben des Förderbandes (67) mit einer gleichen oder höheren Geschwindigkeit als der relativen Geschwindigkeit zwischen der ersten und/oder zweiten Aufnahme und der ersten und/oder zweiten Förderrampe.

13. Verfahren nach einem der vorstehenden Ansprüche 10 bis 12,
umfassend die Schritte:
- Absenken der angehobenen, mit der ersten oder zweiten Förderrampe in Anlage befindlichen, zur Horizontalen geneigten Aufnahme, wenn ein Verkeilen von Stückgut festgestellt wird,
- Bringen der anderen Förderrampe und einer anderen seitlichen Auslassöffnung des Ladungsträgers (5) in Anlage miteinander,
- Schwenken der Aufnahme in eine entgegengesetzte, zur Horizontalen geneigte Stellung, und
- erneutes Anheben der Aufnahme relativ zur der nun in Anlage befindlichen Förderrampe.

## Claims

1. Apparatus (1, 50) for emptying a load carrier (5) loaded with articles, in particular in the form of packages (7), which has a lateral outlet opening (9) for removal of the articles, comprising
- a mount for the load carrier (5), and
- a conveyor (21, 61) for carrying the articles away, wherein
- the apparatus (1, 50) has a conveyor ramp (11, 51) arranged upstream of the conveyor (21, 81), wherein the conveyor ramp (11, 51) and the lateral outlet opening (9) of the load carrier (5) can be brought into contact with each other,
- the mount and the conveyor ramp (11, 51) are pivotable into a position which is inclined with respect to the horizontal and in which the conveyor ramp (11, 51) is in contact with the lateral outlet opening (9) of the load carrier (5), and
- the mount and the conveyor ramp (11, 51) which is in contact with the load carrier (5) are moveable relative to each other in the inclined position in such a way that the mount and the conveyor (21, 61) are moved toward each other,
**characterised in that**
arranged between the conveyor ramp (11, 51) and the conveyor (21, 61) for carrying the articles away is a conveyor belt (67) for transferring the articles from the load carrier in the direction of the conveyor (21, 61).

2. Apparatus according to claim 1 for a load carrier which has a second lateral outlet opening in opposite relationship to the first lateral outlet opening (9),
**characterised in that** the conveyor ramp (11, 51) is a first conveyor ramp, the conveyor (21, 61) is a first conveyor and the apparatus further has a second conveyor for conveying the articles away and a second conveyor ramp arranged upstream of the second conveyor, wherein the second conveyor ramp and the lateral outlet opening of the load carrier (5) can be brought into contact with each other,
- the mount and the second conveyor ramp are pivotable into a position which is inclined relative to the horizontal and in which the second conveyor ramp is in contact with the lateral outlet opening of the load carrier (5), and
- the mount and the second conveyor ramp (11, 51) which is in contact with the load carrier (5) are moveable relative to each other in the inclined position in such a way that the mount and the second conveyor are moved toward each other.

3. Apparatus according to claim 2 **characterised in that** the mount is arranged between the first conveyor ramp and second conveyor ramp and is pivotable selectively in the direction of the first or second conveyor ramp.

4. Apparatus according to one of the preceding claims **characterised in that** the conveyor (21, 61) for carrying the articles away has one or more conveyor belts or one or more conveyor chutes.

5. Apparatus according to one or more of the preceding claims **characterised in that** the conveyor (21, 61) for carrying the articles away has means for slowing down the articles being carried away.

6. Apparatus according to one of the preceding claims **characterised in that** the conveyor (21, 61) for carrying the articles away is adjustable in height and/or angle, preferably adapted to a displacement movement of the conveyor ramp (11, 51) or the first and/or second conveyor ramp (11, 51).

7. Apparatus according to one of the preceding claims **characterised by** a shaker device adapted to produce vibrations of the mount, the load carrier (5) and/or the conveyor ramp (11, 51) or the first and/or second conveyor ramp.

8. Apparatus according to claim 1 **characterised in that** the conveyor belt (67) is drivable at a higher speed than the relative speed between the mount and the conveyor ramp (11, 51).

9. Apparatus according to one of the preceding claims **characterised by** one or more guide plates arranged above the conveyor (21, 61) and adapted to deflect the articles fed to the conveyor in the conveyor direction.

10. A method of emptying a load carrier (5) loaded with articles, in particular in the form of packages (7), which has a lateral outlet opening (9) for removal of the articles, in particular using an apparatus (1, 50) according to one of claims 1 to 9, including the steps:
- providing the load carrier (5) in a first and/or second mount,
- bringing a first and/or second conveyor ramp (11, 51) and the lateral outlet opening (9) of the load carrier (5) into contact with each other,
- pivoting the first and/or second mount and the first and/or second conveyor ramp (11, 51) into a position which is inclined relative to the horizontal and in which the first and/or second conveyor ramp (11, 51) is in contact with the lateral outlet opening (9) of the load carrier,
- moving the mount and the first and/or second conveyor ramp (11, 51) which is in contact with the load carrier (5) relative to each other in the inclined position in such a way that the first and/or second mount and a conveyor (21, 61) are moved towards each other, and
- discharging the articles from the load carrier (5), which articles pass as a consequence of the relative movement through the outlet opening (9) which becomes free by means of a conveyor belt (67) arranged between the first and/or second conveyor ramp and the conveyor (21, 61) for transferring the articles from the load carrier in the direction of the conveyor (21, 61)

11. A method according to claim 10 wherein the mount is displaced by means of a drive unit in the inclined position along the conveyor ramp (11)

12. A method according to one of claims 10 and 11 including one, more or all of the steps:
- driving the first and/or second conveyor ramp (11, 51) substantially synchronously with the movement relative to the mount,
- reciprocating a collecting rocker (19, 59) arranged between the first and/or second conveyor ramp (11, 51) and the conveyor (21, 61) for carrying the articles away between a preferably horizontal collecting position and preferably inclined release position,
- transporting the load carrier (5) in a horizontal plane to an abutment point and coupling to the first and/or second conveyor ramp (11, 51) upon attainment of the abutment point,
- slowing down the articles being carried away, and/or
- adjusting the height and/or the angle of the conveyor (21, 61) for carrying the articles away, preferably adapted to a displacement movement of the first and/or second conveyor ramp (51), and/or
- driving the conveyor belt (67) at the same or a higher speed than the relative speed between the first and/or second mount and the first and/or second conveyor ramp.

13. A method according to one of preceding claims 10 to 12 including the steps:
- lowering the raised mount which is in contact with the first or second conveyor ramp and which is inclined relative to the horizontal if wedging of articles is detected,
- bringing the other conveyor ramp and another lateral outlet opening of the load carrier (5) into contact with each other,
- pivoting the mount into an opposite position of being inclined relative to the horizontal, and
- again raising the mount relative to the conveyor ramp which is now in contact.

## Revendications

1. Dispositif (1, 50) servant à vider un porte-charge (5) chargé d'articles individuels, en particulier se présentant sous la forme d'unités d'emballage (7), lequel présente une ouverture de sortie (9) latérale servant à prélever les articles individuels, comprenant
- un logement pour le porte-charge (5), et
- un convoyeur (21, 61) servant à évacuer les articles individuels, dans lequel
- le dispositif (1, 50) présente une rampe de convoyage (11, 51) installée en amont du convoyeur (21, 61), dans lequel la rampe de convoyage (11, 51) et l'ouverture de sortie (9) latérale du porte-charge (5) peuvent être amenées en appui l'une avec l'autre,
- le logement et la rampe de convoyage (11, 51) peuvent passer par pivotement dans une position inclinée par rapport à l'horizontale, dans laquelle la rampe de convoyage (11, 51) se trouve en appui avec l'ouverture de sortie (9) latérale du porte-charge (5), et
- le logement et la rampe de convoyage (11, 51) se trouvant en appui avec le porte-charge (5) peuvent être déplacés l'un par rapport à l'autre dans la position inclinée de telle manière que le logement et le convoyeur (21, 61) sont rapprochés l'un de l'autre,
**caractérisé en ce que**
est disposée, entre la rampe de convoyage (11, 51) et le convoyeur (21, 61) servant à évacuer les articles individuels, une bande de convoyage (67) servant à transférer les articles individuels depuis le porte-charge en direction du convoyeur (21, 61).

2. Dispositif selon la revendication 1 pour un porte-charge, qui présente une deuxième ouverture de sortie latérale faisant face à la première ouverture de sortie (9) latérale,
**caractérisé en ce que** la rampe de convoyage (11, 51) est une première rampe de convoyage, le convoyeur (21, 61) est un premier convoyeur, et le dispositif présente par ailleurs un deuxième convoyeur servant à évacuer les articles individuels ainsi qu'une deuxième rampe de convoyage installée en amont du deuxième convoyeur, dans lequel
la deuxième rampe de convoyage et la deuxième ouverture de sortie latérale du porte-charge (5) peuvent être amenées en appui l'une avec l'autre,
- le logement et la deuxième rampe de convoyage peuvent passer par pivotement dans une position inclinée par rapport à l'horizontale, dans laquelle la deuxième rampe de convoyage se trouve en appui avec la deuxième ouverture de sortie latérale du porte-charge (5), et
- le logement et la deuxième rampe de convoyage (11, 51) se trouvant en appui avec le porte-charge (5) peuvent être déplacés l'un par rapport à l'autre dans la position inclinée de telle manière que le logement et le deuxième convoyeur sont rapprochés l'un de l'autre.

3. Dispositif selon la revendication 2,
**caractérisé en ce que** le logement est disposé entre la première rampe de convoyage et la deuxième rampe de convoyage et peut pivoter au choix en direction de la première ou de la deuxième rampe de convoyage.

4. Dispositif selon l'une quelconque des revendications précédentes,
**caractérisé en ce que** le convoyeur (21, 61) servant à évacuer les articles individuels présente une ou plusieurs bandes de convoyage ou un ou plusieurs toboggans de convoyage.

5. Dispositif selon l'une quelconque ou plusieurs des revendications précédentes, **caractérisé en ce que** le convoyeur (21, 61) servant à évacuer les articles individuels présente des moyens servant à freiner les articles individuels évacués.

6. Dispositif selon l'une quelconque des revendications précédentes,
**caractérisé en ce que** le convoyeur (21, 61) servant à évacuer les articles individuels peut être réglé en hauteur et/ou de manière angulaire, de préférence de manière adaptée à un déplacement d'ajustement de la rampe de convoyage (11, 51) ou de la première et/ou de la deuxième rampe de convoyage (11, 51).

7. Dispositif selon l'une quelconque des revendications précédentes,
**caractérisé par** un système agitateur, qui est mis au point pour faire vibrer le logement, le porte-charge (5) et/ou la rampe de convoyage (11, 51) ou la première et/ou la deuxième rampe de convoyage (11, 51).

8. Dispositif selon la revendication 1,
**caractérisé en ce que** la bande de convoyage (67) peut être entraînée à une vitesse plus importante que la vitesse relative entre le logement et la rampe de convoyage.

9. Dispositif selon l'une quelconque des revendications précédentes, **caractérisé par** une ou plusieurs tôles directrices, qui sont disposées au-dessus du convoyeur (21, 61) et qui sont adaptées afin de dévier les articles individuels amenés au convoyeur dans la direction de convoyage.

10. Procédé servant à vider un porte-charge (5) chargé en articles individuels, en particulier se présentant sous la forme d'articles d'emballage (7), lequel présente une ouverture de sortie (9) latérale servant à prélever les articles individuels, en particulier en utilisant un dispositif (1, 50) selon l'une quelconque des revendications 1 à 9, comprenant les étapes suivantes consistant à :
- fournir le porte-charge (5) dans un premier et/ou un deuxième logement,
- amener une première et/ou une deuxième rampe de convoyage (11, 51) et l'ouverture de sortie (9) latérale du porte-charge (5) en appui l'une avec l'autre,
- faire pivoter le premier et/ou le deuxième logement et la première et/ou la deuxième rampe de convoyage (11, 51) dans une position inclinée par rapport à l'horizontale, dans laquelle la première et/ou la deuxième rampe de convoyage (11, 51) se trouve en appui avec l'ouverture de sortie (9) latérale du porte-charge,
- déplacer le logement et la première et/ou la deuxième rampe de convoyage (11, 51) se trouvant en appui avec le porte-charge (5) dans la position inclinée les uns par rapport aux autres de telle manière que le premier et/ou le deuxième logement et un convoyeur (21, 61) sont rapprochés les uns des autres, et
- évacuer les articles individuels hors du porte-charge (5), qui traverse, suite au déplacement relatif, l'ouverture de sortie (9) dégagée, au moyen d'une bande de convoyage (67) disposée entre la première et/ou la deuxième rampe de convoyage et le convoyeur (21, 61), servant à transférer les articles individuels depuis le porte-charge en direction du convoyeur (21, 61).

11. Procédé selon la revendication 10,
dans lequel le logement est ajusté au moyen d'une unité d'entraînement dans la position inclinée le long de la rampe de convoyage (11).

12. Procédé selon l'une quelconque des revendications 10 et 11,
comprenant une, plusieurs ou toutes les étapes qui suivent consistant à :
- entraîner la première et/ou la deuxième rampe de convoyage (11, 51) sensiblement de manière synchrone par rapport au déplacement par rapport au logement,
- déplacer en va-et-vient une bascule de collecte (19, 59), disposée entre la première et/ou la deuxième rampe de convoyage (11, 51) et le convoyeur (21, 61) servant à évacuer les articles individuels, entre une position de collecte de préférence horizontale et une position de libération de préférence inclinée,
- transporter le porte-charge (5) dans un plan horizontal jusqu'à un point de butée et coupler à la première et/ou à la deuxième rampe de convoyage (11, 51) lorsque le point de butée est atteint,
- freiner les articles individuels évacués, et/ou
- régler la hauteur et/ou l'angle du convoyeur (21, 61) servant à évacuer les articles individuels, de préférence de manière adaptée à un déplacement d'ajustement de la première et/ou de la deuxième rampe de convoyage (51), et/ou
- entraîner la bande de convoyage (67) à une vitesse identique ou plus importante que la vitesse relative entre le premier et/ou le deuxième logement et la première et/ou la deuxième rampe de convoyage.

13. Procédé selon l'une quelconque des revendications précédentes 10 à 12, comprenant les étapes suivantes consistant à :
- abaisser le logement relevé, se trouvant en appui avec la première ou la deuxième rampe de convoyage, inclinée par rapport à l'horizontale, quand il est constaté que des articles individuels sont coincés,
- amener l'autre rampe de convoyage et une autre ouverture de sortie latérale du porte-charge (5) en appui l'une avec l'autre,
- pivoter le logement dans une position opposée, inclinée par rapport à l'horizontale, et
- relever à nouveau le logement par rapport à la rampe de convoyage se trouvant dès lors en appui.
